# EUROPEAN PATENT APPLICATION

(11) **EP 4 637 062 A1**
(43) Date of publication of application: **22.10.2025**
(21) Application number: 22968168.9
(22) Date of filing: 14.12.2022
(51) Int. Cl.: H04L 1/18, H04W 74/00

(54) **HARQ PROCESS PROCESSING METHOD AND APPARATUS, DEVICE, STORAGE MEDIUM, AND PRODUCT**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LIN, Yanan, Dongguan, Guangdong 523860 (CN); SHI, Cong, Dongguan, Guangdong 523860 (CN)
(74) Representative: Penza, Giancarlo
(86) International application number: PCT/CN2022/139141
(87) International publication number: WO 2024/124458

(57) **Abstract**

A method and apparatus for processing HARQ processes, a device, a storage medium, and a product, relate to the technical field of wireless communication. The method includes: determining (301) at least one HARQ process of at least one PUSCH among multiple PUSCHs. This solution may avoid transmission failures of MAC PDUs in HARQ processes that need to be used/reserved due to adjacent or nearby PUSCHs using a same HARQ process, thereby improving transmission efficiency.

## Description

### TECHNICAL FIELD

The disclosure relates to the technical field of wireless communication, and in particular to a method and apparatus for processing HARQ processes, a device, a storage medium, and a product.

### BACKGROUND

Hybrid Automatic Repeat reQuest (HARQ) is a technology that combines forward error correction with automatic repeat request.

In the related art, when there is one CG resource in a configured grant (CG) period, or when there are multiple CG resources in a CG period, there is a corresponding HARQ process at each CG resource position.

### SUMMARY

Embodiments of the disclosure provide a method and apparatus for processing HARQ processes, a device, a storage medium, and a product. The technical solution is as follows.

In an aspect, an embodiment of the disclosure provides a method for processing HARQ processes, performed by a terminal device, and including the following operation.

At least one HARQ process of at least one physical uplink shared channel (PUSCH) among multiple PUSCHs is determined. Among HARQ process identifiers of the multiple PUSCHs, at least one HARQ process identifier is different from other HARQ process identifiers.

In another aspect, an embodiment of the disclosure provides an apparatus for processing HARQ processes, including a processing module.

The processing module is configured to determine at least one HARQ process of at least one physical uplink shared channel (PUSCH) among multiple PUSCHs. Among HARQ process identifiers of the multiple PUSCHs, at least one HARQ process identifier is different from other HARQ process identifiers.

In yet another aspect, an embodiment of the disclosure provides a terminal device, including a processor, a memory and a transceiver.

The processor is configured to determine at least one HARQ process of at least one physical uplink shared channel (PUSCH) among multiple PUSCHs. Among HARQ process identifiers of the multiple PUSCHs, at least one HARQ process identifier is different from other HARQ process identifiers.

In yet another aspect, an embodiment of the disclosure further provides a computer-readable storage medium, having stored thereon a computer program, and the computer program is loaded and executed by a processor, to implement the above method for processing the HARQ processes.

In yet another aspect, a computer program product or computer program is provided. The computer program product or computer program includes computer instructions, which are stored in a computer-readable storage medium. A processor of a terminal device or a network side device reads the computer instructions from the computer-readable storage medium, and the processor executes the computer instructions, causing the terminal device or the network side device to perform the above method for processing the HARQ processes.

In yet another aspect, a computer program is provided. The computer program includes computer instructions. A processor of a terminal device or a network side device executes the computer instructions, causing the terminal device or the network side device to perform the above method for processing the HARQ processes.

In yet another aspect, a chip is provided. The chip is configured to perform the above method for processing the HARQ processes.

The technical solution provided in the embodiments of the disclosure may bring the following beneficial effects. For multiple PUSCHs, the terminal device may determine the at least one HARQ process of the at least one PUSCH to coordinate HARQ process identifiers of the multiple PUSCHs, thereby avoiding transmission failures of Media Access Control (MAC) Packet Data Units (PDUs) in HARQ processes that need to be used/reserved due to adjacent or nearby PUSCHs using a same HARQ process, and improving transmission efficiency.

### BRIEF DESCRIPTION OF THE DRAWINGS

FIG. 1 is a schematic diagram of an architecture of a communication system according to an embodiment of the disclosure;
FIG. 2 is a schematic diagram of a transmission period according to the disclosure;
FIG. 3 is a flowchart of a method for processing HARQ processes according to an embodiment of the disclosure;
FIG. 4 is a flowchart of a method for processing HARQ processes according to an embodiment of the disclosure;
FIG. 5 is a schematic diagram of HARQ process identifiers according to an exemplary embodiment of the disclosure;
FIG. 6 is a schematic diagram of HARQ process identifiers according to an exemplary embodiment of the disclosure;
FIG. 7 is a block diagram of an apparatus for processing HARQ processes according to an embodiment of the disclosure; and
FIG. 8 is a schematic structural diagram of a device according to an embodiment of the disclosure.

### DETAILED DESCRIPTION

A network architecture and service scenarios described in the embodiments of the disclosure are intended to illustrate the technical solution in the embodiments of the disclosure more clearly, and do not constitute a limitation on the technical solution according to the embodiments of the disclosure. It may be known to those of ordinary skill in the art that, with an evolution of the network architecture and an emergence of new service scenarios, the technical solution according to the embodiments of the disclosure is also applicable to similar technical problems.

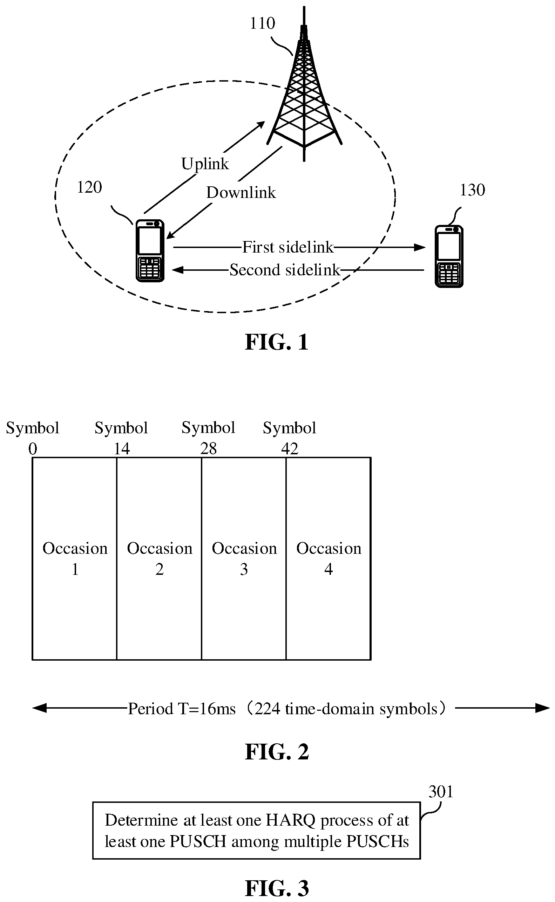

FIG. 1 shows a schematic diagram of a communication system according to an exemplary embodiment of the disclosure. The communication system includes a network side device 110, and a terminal device 120 and/or the terminal device 120 and a terminal device 130, which is not limited in the disclosure.

The network side device 110 in the disclosure provides wireless communication functions. The network side device 110 includes, but is not limited to: an Evolved Node B (eNB), a Radio Network Controller (RNC), a Node B (NB), a Base Station Controller (BSC), a Base Transceiver Station (BTS), a Home Base Station (e.g., a Home Evolved Node B, or a Home Node B (HNB)), a Baseband Unit (BBU), an Access Point (AP) in a Wireless Fidelity (Wi-Fi) system, a wireless relay node, a wireless backhaul node, a Transmission Point (TP), or a Transmission and Reception Point (TRP), etc. The network side device 110 may also be a Next Generation Node B (gNB) or a transmission point (TRP or TP) in a 5th Generation (5G) mobile communication system, or one antenna panel or a group (including multiple antenna panels) of antenna panels of a base station in a 5G system, or a network node (e.g., a BBU, or a Distributed Unit (DU), etc.) constituting a gNB or transmission point, or a base station in a Beyond Fifth Generation (B5G) or 6th Generation (6G) mobile communication system, or a Core Network (CN), Fronthaul, Backhaul, Radio Access Network (RAN), network slice, etc., or a serving cell, Primary Cell (PCell), Primary Secondary Cell (PSCell), Special Cell (SpCell), Secondary Cell (SCell), or neighboring cell of a terminal device.

The terminal device 120 and/or the terminal device 130 in the disclosure, is also referred to as User Equipment (UE), access terminal, user unit, user station, mobile station, mobile terminal, remote station, remote terminal, mobile device, user terminal, terminal, wireless communication device, user agent, user apparatus. The terminal includes, but is not limited to: a handheld device, a wearable device, a vehicle-mounted device, and an Internet of Things (IoT) device, etc., such as: a mobile phone, a tablet computer, an e-book reader, a laptop computer, a desktop computer, a television, a gaming console, a Mobile Internet Device (MID), an Augmented Reality (AR) terminal, a Virtual Reality (VR) terminal and Mixed Reality (MR) terminal, a wearable device, a joystick, an electronic tag, a controller, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a Wireless Local Loop (WLL) station, a Personal Digital Assistant (PDA), a Set Top Box (STB), a Customer Premise Equipment (CPE), etc.

The network side device 110 and the terminal device 120 communicate with each other through a certain air interface technology, such as a Uu interface. Exemplarily, there are two communication scenarios between the network side device 110 and the terminal device 120: an uplink communication scenario and a downlink communication scenario. Here, uplink communication refers to transmitting signals to the network side device 110, and downlink communication refers to transmitting signals to the terminal device 120. The terminal device 120 and the terminal device 130 communicate with each other through a certain air interface technology, such as the Uu interface. In some embodiments, there are two communication scenarios between the terminal device 120 and the terminal device 130: a first sidelink communication scenario and a second sidelink communication scenario. The first sidelink communication refers to transmitting signals to the terminal device 130, and the second sidelink communication refers to transmitting signals to the terminal device 120. The terminal device 120 and the terminal device 130 are both within a network coverage and in a same cell, or the terminal device 120 and the terminal device 130 are both within the network coverage but in different cells, or the terminal device 120 is within the network coverage while the terminal device 130 is outside the network coverage.

The technical solution according to the embodiments of the disclosure may be applied to various communication systems, such as: Global System of Mobile communication (GSM) systems, Code Division Multiple Access (CDMA) systems, Wideband Code Division Multiple Access (WCDMA) systems, General Packet Radio Service (GPRS), Long Term Evolution (LTE) systems, LTE Frequency Division Duplex (FDD) systems, LTE Time Division Duplex (TDD) systems, Advanced Long Term Evolution (LTE-A) systems, Universal Mobile Telecommunication System (UMTS), Worldwide Interoperability for Microwave Access (WiMAX) communication systems, 5G mobile communication systems, New Radio (NR) systems, evolution systems of NR system, LTE-based access to unlicensed spectrum (LTE-U) systems, NR-based access to unlicensed spectrum (NR-U) systems, Terrestrial Network (NTN) systems, Non-Terrestrial Network (NTN) systems, Wireless Local Area Networks (WLANs), Wireless Fidelity (Wi-Fi), cellular IoT systems, cellular passive IoT systems. The technical solution according to the embodiments of the disclosure may also be applied to subsequent evolution systems of the 5G NR system, and may further be applied to B5G, 6G and subsequent evolution systems. In some embodiments of the disclosure, "NR" may also be referred to as 5G NR system or 5G system. The 5G mobile communication system may include Non-Standalone (NSA) and/or Standalone (SA).

The technical solution according to the embodiments of the disclosure may further be applied to Machine Type Communication (MTC), Long Term Evolution-Machine (LTE-M), Device to Device (D2D) networks, Machine to Machine (M2M) networks, Internet of Things (IoT) networks, or other networks. The IoT network may include, for example, a vehicle network. The communication modes in the vehicle network system are collectively referred to as Vehicle to X (V2X), where X may represent anything. For example, V2X may include: Vehicle to Vehicle (V2V) communication, Vehicle to Infrastructure (V2I) communication, Vehicle to Pedestrian (V2P) communication, or Vehicle to Network (V2N) communication, etc.

### 1) CG PUSCH

NR uplink supports semi-static periodic transmission mode, i.e., configured grant PUSCH transmission, which specifically includes two types as follows.
Type-1 CG: take effect without activation by Downlink Control Information (DCI), after transmission parameters are configured by Radio Resource Control (RRC),.
Type-2 CG: take effect with activation by DCI, after the transmission parameters are configured by RRC.

CG supports symbol-level periods of 2 symbols/7 symbols, and slot-level periods of {1, 2, 4, 5, 8, 10, 16, 20, 32, 40...}. In NR R15/16/17, a PUSCH is transmitted once within one CG period (i.e., there is only one PUSCH occasion).

An identifier of an HARQ process carried by the CG PUSCH is determined based on a first time-domain symbol occupied by the CG PUSCH according to one of the following two formulas: HARQ Process ID = [floor(CURRENT_symbol/periodicity)] modulo nrofHARQ- Processes; HARQ Process ID = [floor(CURRENT_symbol / periodicity)] modulo nrofHARQ-Processes + harq-ProcID-Offset2.

Herein CURRENT_symbol = (SFN × numberOfSlotsPerFrame × numberOfSymbolsPerSlot + slot number in the frame × numberOfSymbolsPerSlot + symbol number in the slot), and numberOfSlotsPerFrame and numberOfSymbolsPerSlot refer to the number of consecutive slots per frame and the number of consecutive symbols per slot, respectively as specified in TS 38.211.

### 2) CG-UCI

To support the transmission of CG PUSCH in unlicensed frequency bands, NR introduces CG Uplink Control Information (UCI). For CG PUSCH transmitted in unlicensed frequency bands, the identifier of the HARQ process carried by the CG PUSCH is no longer determined based on the occupied time-domain resources. The UE embeds CG-UCI information in the transmitted CG PUSCH to inform the base station of the identifier of the HARQ process (HPI, which is also referred to as "HARQ process number"), redundancy version information, and new data indicator information carried by the current CG PUSCH, as detailed in the parameters shown in the following Table 1.

**Table 1**

| Field | Bitwidth |
|---|---|
| HARQ process number | 4 |
| Redundancy version | 2 |
| New data indicator | 1 |
| Channel Occupancy Time (COT) sharing information | log₂C if both higher layer parameter ul-toDL-COT-SharingED-Threshold and higher layer parameter cg-COT-SharingList are configured, where C is the number of combinations configured in cg-COT-SharingList |
| | 1 if higher layer parameter ul-toDL-COT-SharingED-Threshold is not configured and higher layer parameter cg-COT-SharingOffset is configured |
| | 0 otherwise |
| | If a UE indicates COT sharing other than "no sharing" in a CG PUSCH within the UE's initiated COT, the UE should provide consistent COT sharing information in all the subsequent CG PUSCHs, if any, occurring within the same UE's initiated COT such that the same DL starting point and duration are maintained |

Here, the last item is configured to indicate whether the subsequent resources of the Channel Occupancy Time (COT) where the current CG PUSCH is located may be shared for downlink transmission.

### 3) Extended Reality (XR)

At the 3GPP RAN #88e meeting, a research project named "eXtended Reality (XR) and cloud game (CG) evaluations for NR" was approved. The services studied in this project include Augmented Reality (AR)/Virtual Reality (VR)/Cloud gaming, etc. One of the main services of XR/CG is the video stream service, of which arrival rate (measured in fps, i.e., frame per second) may be 30fps, 60fps, 90fps, 120fps, and the corresponding periods of the video stream are {33.33ms, 16.67ms, 11.11ms, 8.33ms}.

Characteristics of XR data include: variable data packet size and relatively large average value. Taking AR/VR with a data rate of 100Mbps as an example, an average uplink data packet size is 20833 bytes, a maximum value is 31250 bytes, and a minimum value is 10417 bytes. That is, the size of the data packets to be transmitted in each period is between [10417 bytes, 31250 bytes]. In a practical system with 100M bandwidth, transmitting a 20833-byte data packet approximately requires transmission resources of 4 slots.

Currently, 3GPP has determined to support configuring multiple PUSCH occasions within a CG period for transmitting large XR data packets. Furthermore, when the data volume in a certain period is relatively small and does not require to occupy all of pre-configured multiple PUSCH occasions, the UE may dynamically inform the base station of unused PUSCH occasions in this period. The base station may then reallocate the unused PUSCH occasions to other UEs for data transmission, thereby improving system efficiency.

When multiple PUSCH occasions are configured within a period, if the existing working mechanism (i.e., the formulan HARQ process ID = [floor(CURRENT_symbol/ periodicity)] modulo nrofHARQ-Processes) of CG PUSCH on the granted carrier is continued to be adopted, a result of dividing CURRENT_symbol by the periodicity and rounding down is the same for multiple PUSCH occasions within a period. This leads to consecutive PUSCH occasions corresponding to the same HARQ process identifier. Please refer to FIG. 2, which shows a schematic diagram of a transmission period according to the disclosure. Taking FIG. 2 as an example, an HARQ process X is carried in occasion 1, the HARQ process X is reused immediately in occasion 2. New data is loaded into a buffer of this process, and the data transmitted in occasion 1 is cleared. Therefore, the data transmitted in occasion 1 cannot support HARQ retransmission.

The solution shown in the embodiments of the disclosure provides a method for determining HARQ processes of multiple PUSCHs, which may avoid transmission failures of MAC PDUs in HARQ processes that need to be used/reserved due to adjacent or nearby PUSCHs using a same HARQ process, and improve transmission efficiency.

The solution is applicable to CG transmission scenarios, as well as to dynamic uplink grant (DG) transmission scenarios, and also to DG + CG transmission scenarios.

For example, there are multiple CG transmission occasions or multiple CG PUSCHs in a CG period.

For example, there are one or more CG transmission occasions or CG PUSCHs in a CG period. Moreover, there are one or more CG configurations, and different CG configurations correspond to different CG indices.

For example, multiple DG PUSCH transmissions are scheduled within a duration, or multiple DG PUSCH transmissions are scheduled by a DCI.

For example, within a duration, a DCI schedules one or more DG PUSCH transmissions while simultaneously activating or indicating one or more CG PUSCH transmissions. In an embodiment, the duration is unrelated to the CG period. In an embodiment, the duration may be one or more CG periods.

For example, within a duration, there are one or more CG PUSCH transmissions, and simultaneously, one or more DG PUSCH transmissions are scheduled by DCI. In an embodiment, the duration is unrelated to the CG period. In an embodiment, the duration may be one or more CG periods.

For example, a DCI schedules one or more DG PUSCH transmissions while simultaneously activating or indicating one or more CG PUSCH transmissions. In an embodiment, the activated or indicated CG PUSCHs may span one or more CG periods.

For example, there are one or more CG PUSCH transmissions, and one or more DG PUSCH transmissions are scheduled by DCI. In an embodiment, the existing one or more CG PUSCHs may span one or more CG periods. In an embodiment, the existing one or more CG PUSCHs may correspond to a CG index or to different CG indices.

Please refer to FIG. 3, which shows a flowchart of a method for processing HARQ processes according to an embodiment of the disclosure. The method may be performed by a terminal device. The terminal device may be the terminal device 120 or the terminal device 130 in the network architecture shown in FIG. 1. The method may include the following operation 301.

At 301, at least one HARQ process of at least one PUSCH among multiple PUSCHs is determined.

Among HARQ process identifiers of the multiple PUSCHs, at least one HARQ process identifier is different from other HARQ process identifiers.

Alternatively, among the HARQ process identifiers of the multiple PUSCHs, at least one HARQ process identifier is the same as the other HARQ process identifiers.

In view of above, for multiple PUSCHs, the terminal device may determine the at least one HARQ process of the at least one PUSCH, to control identifiers of HARQ processes of the multiple PUSCHs, thereby avoiding transmission failure of MAC PDUs in HARQ processes that need to be used/reserved due to adjacent or nearby PUSCHs using a same HARQ process, and improving transmission efficiency.

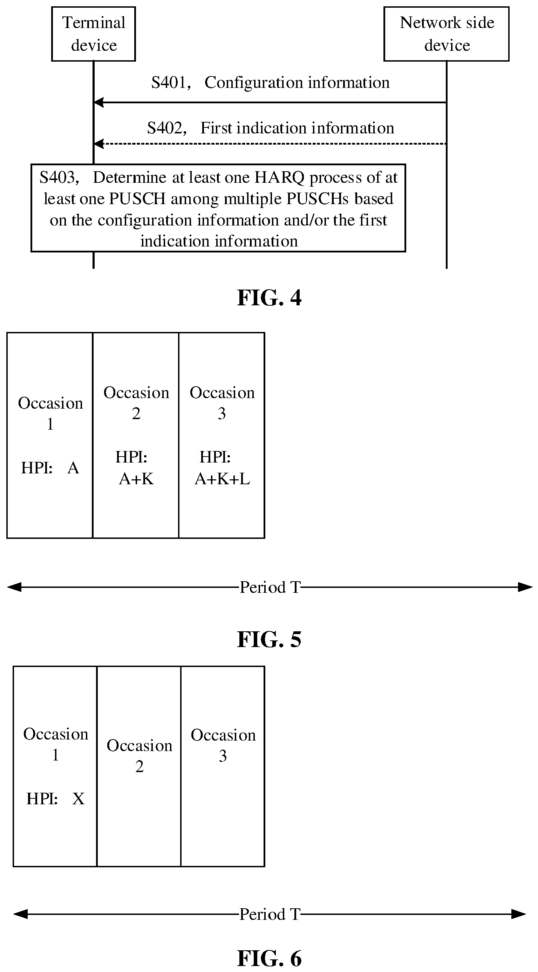

Please refer to FIG. 4, which shows a flowchart of a method for processing HARQ processes according to an embodiment of the disclosure. The method may be performed by a terminal device and a network side device through interaction. The terminal device and the network side device may be the terminal device 120 (or the terminal device 130) and the network side device 110 respectively in the network architecture shown in FIG. 1. As shown in FIG. 4, the method may include the following operations 401 to 403.

At 401, the network side device transmits configuration information to the terminal device, and the terminal device receives the configuration information.

In some embodiments, the configuration information is configured for CG and/or DG transmission, or the configuration information is configured for HARQ process determination.

In some embodiments, the configuration information includes CG configuration and/or DG configuration.

In some embodiments, a CG period of the CG configuration includes one or more CG PUSCH occasions.

In some embodiments, the configuration information includes:
Available HARQ processes or a range of available HARQ processes.

In some embodiments, the available HARQ processes or the range of available HARQ processes includes:
A number of HARQ processes and/or an HARQ process offset.

In some embodiments, the number of HARQ processes and/or the HARQ process offset is for all CG occasions of uplink resource configuration; or the number of HARQ processes and/or the HARQ process offset is for a specific CG occasion in each period of the uplink resource configuration.

In some embodiments, the configuration information is configured through a radio resource control (RRC) reconfiguration message.

For example, the configuration information is configured through RRC reconfiguration.

For example, the configuration information includes available UL resources within a duration. In an embodiment, the available UL resources include multiple UL resources. In an embodiment, the configuration information includes the CG configuration. In an embodiment, a CG period of the CG configuration includes one or more CG PUSCH occasions.

For example, the configuration information includes the available HARQ processes or the range of available HARQ processes. In an embodiment, the available HARQ processes or the range of HARQ processes includes the number of HARQ processes and/or the HARQ process offset. In an embodiment, the HARQ processes or the range of HARQ processes, or the number of HARQ processes and/or the HARQ process offset, are for all CG occasions of the UL resource configuration (e.g., CG), or for the specific CG occasion (e.g., a first CG occasion in each CG period) in each period of the UL resource configuration (e.g., CG).

At 402, the network side device transmits first indication information to the terminal device, and the terminal device receives the first indication information.

The operation 402 is an optional operation.

In some embodiments, the first indication information is carried in a radio resource control (RRC) message, a media access control (MAC) control element (CE), or downlink control information (DCI).

At 403, the terminal device determines at least one HARQ process of at least one PUSCH among multiple PUSCHs based on the configuration information and/or the first indication information.

In an embodiment, among HARQ process identifiers of the multiple PUSCHs, at least one HARQ process identifier is different from other HARQ process identifiers.

Alternatively, among the HARQ process identifiers of the multiple PUSCHs, at least one HARQ process identifier is the same as the other HARQ process identifiers.

In some embodiments, the operation of determining the at least one HARQ process of the at least one PUSCH among the multiple PUSCHs includes the following operation.

In a case where the multiple PUSCHs include at least two CG resources and/or DG resources within a same period, or in a case where the multiple PUSCHs include at least two CG resources and/or DG resources within a specified duration, the at least one HARQ process of the at least one PUSCH among the multiple PUSCHs is determined.

Alternatively, the terminal device determines the at least one HARQ process of the at least one PUSCH among the multiple PUSCHs in the following cases:

Multiple PUSCH occasions are configured or exist, or multiple PUSCH occasions are configured or exist within a service period or a CG period; or multiple PUSCH occasions are activated/scheduled within a duration or multiple PUSCH occasions are activated/scheduled by a DCI, or multiple CG periods are configured and multiple CG occasions exist within a duration/period, or at least one of HARQ process identifiers used by multiple PUSCH occasions is different; or different data or MAC PDUs need to be transmitted in at least two of multiple PUSCH occasions; or service data volume or data volume to be transmitted or data volume related to a specific service or data volume related to a specific Logical Channel (LCH) or Logical Channel Group (LCG) or PDU session or Quality of Service (QoS) flow or Data Radio Bearer (DRB) is greater than or equal to a first threshold; or multiple PUSCH occasions are for a specific service or LCH or LCG or PDU session or QoS flow or DRB.

In the embodiments of the disclosure, in a case where there are multiple CG resources and/or DG resources within a period, or in a case where there are multiple CG resources and/or DG resources within a duration, transmission intervals of the multiple CG resources and/or DG resources are relatively small, which may result in transmission failure of MAC PDUs in HARQ processes that need to be used/reserved due to two PUSCHs using a same HARQ process. In such cases, the terminal device may comprehensively determine the at least one HARQ process of at least one PUSCH among HARQ processes of the multiple CG resources and/or DG resources, to avoid transmission failure of MAC PDUs in HARQ processes that need to be used/reserved due to two PUSCHs using a same HARQ process in the HARQ processes of multiple CG resources and/or DG resources.

In some embodiments, the operation of determining the at least one HARQ process of the at least one PUSCH among the multiple PUSCHs includes:
determining the at least one HARQ process of the at least one PUSCH among the multiple PUSCHs by using a first parameter; or
determining the at least one HARQ process of the at least one PUSCH among the multiple PUSCHs by using a second HARQ process calculation formula and the first parameter; or
determining the at least one HARQ process of the at least one PUSCH among the multiple PUSCHs by using a first HARQ process calculation formula; or
determining the at least one HARQ process of the at least one PUSCH among the multiple PUSCHs by using the first HARQ process calculation formula and the first parameter; or
determining the at least one HARQ process of the at least one PUSCH among the multiple PUSCHs by using a second factor; or
determining an HARQ process of a specific PUSCH among the multiple PUSCHs by using the second HARQ process calculation formula and the second factor.

Here, the second HARQ process calculation formula may be an HARQ process calculation formula defined in the TS38.321 protocol.

The first HARQ process calculation formula may be a new HARQ process calculation formula proposed in the disclosure, or may be a variant of the second HARQ process calculation formula.

In some embodiments, HARQ process identifiers of all of the multiple PUSCHs are determined by at least one of the second HARQ process calculation formula, the first HARQ process calculation formula, the second factor, or the first parameter.

In the embodiments of the disclosure, the terminal device may determine the HARQ process identifiers of all of the multiple PUSCHs based on at least one of the second HARQ process calculation formula, the first HARQ process calculation formula, the second factor, UE implementation, or the first parameter.

Alternatively, the terminal device may determine HARQ process identifiers of part of the multiple PUSCHs based on at least one of the second HARQ process calculation formula, the first HARQ process calculation formula, the second factor, the UE implementation, or the first parameter.

In an embodiment, whether to determine the HARQ process identifiers of all of the multiple PUSCHs based on at least one of the second HARQ process calculation formula, the first HARQ process calculation formula, the second factor, the UE implementation, or the first parameter may be predefined, or configured by the network, or enabled/disabled by the network, or indicated by the network, or executed upon meeting a condition (e.g., multiple PUSCH occasions are configured or exist, or multiple PUSCH occasions are configured or exist within a service period or a CG period, or multiple PUSCH occasions are activated/scheduled within a duration or multiple PUSCH occasions are activated/scheduled by a DCI, or multiple CG periods are configured and multiple CG occasions exist within a duration/period, or at least one of HARQ process identifiers used by multiple PUSCH occasions is different, or different data or MAC PDUs need to be transmitted in at least two of multiple PUSCH occasions , or service data volume or data volume to be transmitted or data volume related to a specific service or data volume related to a specific LCH or LCG or PDU session or QoS flow or DRB is greater than or equal to a first threshold, or multiple PUSCH occasions are for a specific service or LCH or LCG or PDU session or QoS flow or DRB, etc.), or determined by the UE implementation.

In an embodiment, the determination of the HARQ process identifiers of part of the multiple PUSCHs based on at least one of the second HARQ process calculation formula, the first HARQ process calculation formula, the second factor, the UE implementation, or the first parameter, or the determination of the HARQ process identifiers of part of the multiple PUSCHs based on which one or several of the second HARQ process calculation formula, the first HARQ process calculation formula, the second factor, and the first parameter, may be predefined, or configured by the network, or enabled/disabled by the network, or indicated by the network, or executed upon meeting a condition (e.g., multiple PUSCH occasions are configured or exist, or multiple PUSCH occasions are configured or exist within a service period or a CG period, or multiple PUSCH occasions are activated/scheduled within a duration or multiple PUSCH occasions are activated/scheduled by a DCI, or multiple CG periods are configured and multiple CG occasions exist within a duration/period, or at least one of HARQ process identifiers used by multiple PUSCH occasions is different, or different data or MAC PDUs need to be transmitted in at least two of multiple PUSCH occasions, or service data volume or data volume to be transmitted or data volume related to a specific service or data volume related to a specific LCH or LCG or PDU session or QoS flow or DRB is greater than or equal to a first threshold, or multiple PUSCH occasions are for a specific service or LCH or LCG or PDU session or QoS flow or DRB, etc.), or determined by the UE implementation.

In some embodiments, the operation of determining the at least one HARQ process of the at least one PUSCH among the multiple PUSCHs includes:
determining an HARQ process of the specific PUSCH among the multiple PUSCHs according to the second HARQ process calculation formula; or
determining the HARQ process of the specific PUSCH among the multiple PUSCHs according to the second HARQ process calculation formula and the first parameter; or
determining the HARQ process of the specific PUSCH among the multiple PUSCHs according to the first parameter; or
determining the HARQ process of the specific PUSCH among the multiple PUSCHs according to the first HARQ process calculation formula; or
determining the HARQ process of the specific PUSCH among the multiple PUSCHs according to the second factor; or
determining the HARQ process of the specific PUSCH among the multiple PUSCHs according to the second HARQ process calculation formula and the second factor.

Here, the specific PUSCH may be a first PUSCH (i.e., a starting PUSCH) among the multiple PUSCHs.

Alternatively, the specific PUSCH may also be a PUSCH other than the first PUSCH among the multiple PUSCHs, such as a last PUSCH or a second PUSCH, etc.

In some embodiments, the method further includes the operation of:
determining at least one HARQ process by determining whether to use at least one of the second HARQ process calculation formula, the first HARQ process calculation formula, the second factor, or the first parameter based on network indication, pre-configuration, pre-definition, or a specified condition; or
determining at least one HARQ process by determining to use the at least one of the second HARQ process calculation formula, the first HARQ process calculation formula, the second factor, or the first parameter based on the network indication, the pre-configuration, the pre-definition, or the specified condition.

The pre-definition or the specified condition may indicate in what cases the solution shown in the embodiments of the disclosure is used to determine the at least one HARQ process/process identifier of the at least one PUSCH among the multiple PUSCHs, or the pre-definition or the specified condition may indicate in what cases it is determined which parameters are used to determine the at least one HARQ process/process identifier of the at least one PUSCH among the multiple PUSCHs.

For example, the network indication, the pre-configuration, the pre-definition, or the specified condition may indicate that the terminal device uses the solution shown in the embodiments of the disclosure to determine the HARQ process/process identifier of the at least one PUSCH among the multiple PUSCHs in a case where multiple PUSCHs are configured. For another example, the network indication, the pre-configuration, the pre-definition, or the specified condition may indicate that, in a case where there are multiple PUSCHs in a CG, the terminal device uses the solution shown in the embodiments of the disclosure to determine the at least one HARQ process/process identifier of the at least one PUSCH among the multiple PUSCHs. For yet another example, the network indication, the pre-configuration, the pre-definition, or the specified condition may indicate that, in a case where different CG occasions in a CG period correspond to different HARQ processes, the terminal device uses the solution shown in the embodiments of the disclosure to determine the at least one HARQ process/process identifier of the at least one PUSCH among the multiple PUSCHs. For yet another example, the network indication, the pre-configuration, the pre-definition, or the specified condition may indicate that, in a case where the first parameter or the second factor is disabled, the terminal device uses the first/second HARQ process calculation formula to determine the at least one HARQ process/process identifier of the at least one PUSCH among the multiple PUSCHs.

In some embodiments, the first parameter is configured to:
determine intervals or offsets of HARQ process identifiers of the multiple PUSCHs; or
determine the HARQ process identifiers of the multiple PUSCHs; or
indicate intervals or offsets of HARQ process identifiers of PUSCHs other than a specific PUSCH among the multiple PUSCHs relative to the HARQ process identifier of the specific PUSCH; or
indicate an interval or offset of an HARQ process identifier of a first PUSCH relative to an HARQ process identifier of a specific PUSCH among the multiple PUSCHs, herein the first PUSCH is a PUSCH subsequent to the specific PUSCH among the multiple PUSCHs; or
indicate an interval or offset of the HARQ process identifier of each PUSCH other than a specific PUSCH among the multiple PUSCHs relative to an HARQ process identifier of an X-th PUSCH before the respective PUSCH; or
indicate an interval or offset of an HARQ process identifier of each PUSCH among the multiple PUSCHs relative to an HARQ process identifier of an X-th PUSCH before the respective PUSCH.

In the above, X is an integer greater than or equal to 1.

In an embodiment, the function of the first parameter may include determining information of all of the multiple PUSCHs, or information of at least part of the multiple PUSCHs.

In some embodiments, the first parameter is indicated by configuration information. The configuration information is used for CG transmission or HARQ process determination; or
The first parameter is indicated by first indication information; or
The first parameter is a predefined parameter.

In an embodiment, the first parameter may be indicated or configured by one of RRC, MAC CE, or DCI.

In an embodiment, the first parameter may be configured by RRC and activated/deactivated by DCI or MAC CE.

In an embodiment, the first parameter may be configured by RRC and adjusted by DCI or MAC CE. In some embodiments, the first parameter is further configured to indicate HARQ processes or a usage range of HARQ processes for CG occasions other than the specific CG occasion in each period of the uplink resource configuration.

Alternatively, the first parameter is further configured to indicate HARQ processes or a usage range of HARQ processes for DG occasions other than a specific DG occasion in each period of the uplink resource configuration.

Alternatively, the first parameter is further configured to indicate HARQ processes or a usage range of HARQ processes for CG/DG occasions other than the specific CG/DG occasion in each period of the uplink resource configuration.

In some embodiments, the first parameter is a value interval or value range.

In some embodiments, the first parameter is a value offset.

In some embodiments, the first parameter is a single value.

In some embodiments, the first parameter is intervals or offsets between HARQ processes of adjacent PUSCHs among the multiple PUSCHs.

In some embodiments, the first parameter is an HARQ process identifier of a specific PUSCH among the multiple PUSCHs; or
The first parameter is an process identifier of a first PUSCH other than a specific PUSCH among the multiple PUSCHs; or
The first parameter is an HARQ interval or offset of the first PUSCH other than a specific PUSCH among the multiple PUSCHs relative to a specific PUSCH; or
The first parameter is an HARQ interval or offset of each of the multiple PUSCHs relative to a specific PUSCH; or
The first parameter is an HARQ interval or offset of each of the multiple PUSCHs relative to an HARQ process identifier of an X-th PUSCH before the respective PUSCH.

In some embodiments, among the multiple PUSCHs other than the specific PUSCH, intervals or offsets between adjacent PUSCHs are a same first value; or
Among the multiple PUSCHs, intervals or offsets between adjacent PUSCHs are a same second value.

In some embodiments, the first value is indicated by the network, or the first value is a predefined value; or the second value is indicated by the network, or the second value is a predefined value.

In some embodiments, the first parameter is a first value list.

In some embodiments, the first value list is a value list of HARQ process intervals or offsets of multiple PUSCH occasions; or the first value list is a one-to-one mapping between the PUSCH occasions and the HARQ process intervals or offsets; or the first value list is a value list of HARQ process identifiers of the multiple PUSCH occasions; or the first value list is a one-to-one mapping between the PUSCH occasions and the HARQ process identifiers.
In some embodiments, the first value list includes intervals or offsets between process identifiers of adjacent PUSCHs among the multiple PUSCHs; or
the first value list includes an interval or offset of a process identifier of each of the multiple PUSCHs other than the specific PUSCH, relative to the process identifier of the specific PUSCH; or
the first value list includes an interval or offset of the process identifier of each of the multiple PUSCHs other than the specific PUSCH, relative to a process identifier of an X-th HARQ process before the respective PUSCH; or
The first value list includes process identifiers of the multiple PUSCHs other than the specific PUSCH; or
The first value list includes process identifiers of the multiple PUSCHs; or
The first value list includes intervals or offsets of a process identifier of each of the multiple PUSCHs relative to the process identifier of the specific PUSCH; or
The first value list includes intervals or offsets of the process identifier of each of the multiple PUSCHs relative to a process identifier of an X-th HARQ process before the respective PUSCH.

In some embodiments, the first value list includes at least two values, and each of the at least two values corresponds to a set of intervals or offsets between HARQ processes for PUSCH occasions; or the first value list includes at least two values, and each of the at least two values corresponds to a set of HARQ process identifiers for PUSCH occasions.

In some embodiments, the at least two values correspond to different value indices.

In some embodiments, the method further includes that:
The terminal device determines to activate or use at least one value in the first value list based on second indication information; or
The terminal device determines to deactivate or not use the at least one value in the first value list based on the second indication information.

In some embodiments, the second indication information is carried in downlink control information or MAC CE.

In some embodiments, the first parameter includes at least two second value lists.

In some embodiments, each of the at least two second value lists corresponds to a set of intervals or offsets between HARQ processes for PUSCH occasions; or each of the at least two second value lists corresponds to a set of HARQ process identifiers for PUSCH occasions.

In some embodiments, the second value list is a one-to-one mapping between PUSCH occasions and HARQ process intervals or offsets; or the second value list is a one-to-one mapping between the PUSCH occasions and HARQ identifiers; or the second value list is a value list of HARQ process identifiers of multiple PUSCH occasions; or the second value list is a one-to-one mapping between the PUSCH occasions and HARQ process identifiers.

In some embodiments, the at least two second value lists correspond to different value list indices.

In some embodiments, the method further includes:
The terminal device determines to activate or use at least one of the at least two second value lists based on third indication information; or
The terminal device determines to deactivate or not use the at least one of the at least two second value lists based on the third indication information.

In some embodiments, the third indication information is carried in downlink control information or MAC CE.

In some embodiments, the second factor is related to at least one of the following:
a service characteristic, a data volume, a data volume variation, a number of CG and/or DG configurations, a number of activated or used CGs and/or DGs, a number of resources, a resource configuration period, a number of resources in a period, a number of resources in a duration, a resource spacing, a number of periods, a current period sequence, a number of CG resources in a period, a number of available HARQ processes, an HARQ process offset, a maximum number of HARQ processes, or an HARQ interval or offset between HARQ processes for resources in a period.

In some embodiments, the second factor is a value of an adjustment factor used in the first HARQ process calculation formula; or
The second factor is an HARQ process calculation offset used in an HARQ calculation formula for calculating a position of CG and/or DG.

In some embodiments, the second factor is predefined, or indicated by the network, or configured by the network, or determined by the terminal device.

In some embodiments, the second factor is determined by the terminal device based on at least one of the following:
A service characteristic, a data volume, a data volume variation, a number of CG and/or DG configurations, a number of CG and/or DG configurations, a number of resources, a resource configuration period, a number of resources in a period, a resource spacing, a number of periods, a current period sequence, a number of CG resources in a period, a number of available HARQ processes, an HARQ process offset, a maximum number of HARQ processes, or an HARQ interval or offset between HARQ processes for resources in a period.

In some embodiments, HARQ process identifiers of PUSCHs other than the specific PUSCH among the multiple PUSCHs are equal to the HARQ process identifier of the specific PUSCH plus a first value; or
an HARQ process identifier of each of the PUSCHs other than the specific PUSCH among the multiple PUSCHs is equal to an HARQ process identifier of an X-th PUSCH before the respective PUSCH plus a third value; or
the HARQ process identifier of each of the PUSCHs other than the specific PUSCH among the multiple PUSCHs is incremented or decremented by a second value (i.e., increased or reduced by a second value relative to the HARQ process identifier of its previous or subsequent PUSCH) based on intervals relative to the specific PUSCH. For example, the specific PUSCH is a first PUSCH, and remaining PUSCHs have their HARQ process identifiers incremented from the first PUSCH. For example, if the specific PUSCH is a first PUSCH among the multiple PUSCHs, HARQ process identifiers of a second to an n-th PUSCH among the multiple PUSCHs are equal to the HARQ process identifier of the first PUSCH + 1, + 2, + 3... + n-1, respectively.

In some embodiments, the first HARQ process calculation formula is: HARQ Process ID = [floor (CURRENT_slot × 10/(numberOfSlotsPerFrame × periodicity))*N] modulo nrofHARQ-Processes; or HARQ Process ID = [floor(CURRENT_symbol/periodicity) *N] modulo nrofHARQ-Processes; or HARQ Process ID ={{[floor(CURRENT_symbol/periodicity)] modulo nrofHARQ-Processes + harq-ProcID-Offset2}*N}modulo nrofHARQ-Processes; or HARQ Process ID ={{[floor(CURRENT_symbol/periodicity)] + harq-ProcID- Offset2}*N}modulo nrofHARQ-Processes.

Here, N is the second factor.

In some embodiments, the second HARQ process calculation formula is: HARQ Process ID = [floor (CURRENT_slot × 10/(numberOfSlotsPerFrame × periodicity))] modulo nrofHARQ-Processes; or HARQ Process ID = [floor (CURRENT_slot × 10/(numberOfSlotsPerFrame × periodicity))] modulo nrofHARQ-Processes + harq-ProcID-Offset; or HARQ Process ID = [floor(CURRENT_symbol/periodicity)] modulo nrofHARQ- Processes; or HARQ Process ID = [floor(CURRENT_symbol/periodicity)] modulo nrofHARQ- Processes + harq-ProcID-Offset2.

Here, CURRENT_slot is an identifier of a current slot; numberOfSlotsPerFrame is a number of slots per frame; periodicity is a service period, resource transmission period or configuration period of transmission resources; nrofHARQ-Processes is a number of HARQ processes, a number of HARQ processes available for transmission resources, or a number of HARQ processes applicable to transmission resources; CURRENT_symbol is an identifier of a current symbol; and harq-ProcID-Offset2 is an available HARQ process offset, or used to determine the range of HARQ processes available for transmission resources or for rounding.

In some embodiments, the method further includes that: a modulo operation is performed on HARQ process identifiers of PUSCHs other than the specific PUSCH among the multiple PUSCHs; or
The modulo operation is performed on an HARQ process identifier of each of the multiple PUSCHs; or
The modulo operation is performed on an HARQ process identifier of the specific PUSCH among the multiple PUSCHs.

In some embodiments, the modulo operation is performed in an HARQ process calculation formula, or performed outside the HARQ process calculation formula, or performed on a result of the HARQ process calculation formula.

In an embodiment, the operation that the modulo operation is performed on the HARQ process identifiers of the PUSCHs other than the specific PUSCH among the multiple PUSCHs includes that: the modulo operation is performed on the HARQ process identifiers of the PUSCHs other than the specific PUSCH based on the number of HARQ processes, the number of HARQ processes available for transmission resources, or the number of HARQ processes applicable to transmission resources.

In view of above, for multiple PUSCHs, the terminal device may determine the at least one HARQ process of the at least one PUSCH, so that among the process identifiers of the HARQ processes of the multiple PUSCHs, at least one process identifier is the same or different from other process identifiers. This may avoid transmission failures of MAC PDUs in HARQ processes that need to be used/reserved due to adjacent or nearby PUSCHs using a same HARQ process, and improve transmission efficiency.

### Embodiment One

Based on the solution shown in FIG. 3 or FIG. 4, in Embodiment One, the terminal device may determine, in the case of multiple CG PUSCH resources, a corresponding/available HARQ process or HARQ process identifier (HPI) of at least one CG PUSCH based on the first parameter.

Here, the first parameter is configured to determine intervals/offsets of HARQ processes of the multiple CG PUSCHs, or to determine HARQ process identifiers of the multiple CG PUSCHs, or to indicate an interval/offset of an HARQ process identifier of each of other CG PUSCHs relative to an HARQ process identifier of a specific PUSCH (e.g., the first CG PUSCH), or to indicate an interval/offset of an HARQ process identifier of a CG PUSCH relative to an HARQ process identifier of a specific PUSCH (e.g., a PUSCH immediately before said CG PUSCH, or an X-th CG PUSCH before said CG PUSCH). The first parameter may be a value, or a value list, or multiple value lists. The first parameter may be predefined or configured by the network (e.g., through RRC). The value list is a one-to-one mapping between CG PUSCH occasions and HARQ process intervals/offsets.

The specific implementation may be as follows.

At operation 1, a base station transmits configuration information to a UE. The configuration information is configured for CG transmission or HARQ process determination. In an embodiment, this includes at least one of the following:
a) The configuration information is configured through RRC reconfiguration;
b) The configuration information includes available UL resources within a duration. In an embodiment, the available UL resources include multiple UL resources. In an embodiment, the configuration information includes CG configuration. In an embodiment, a CG period of the CG configuration includes one or more CG PUSCH occasions;
c) The configuration information includes available HARQ processes or a range of available HARQ processes. In an embodiment, the configuration information includes a number of HARQ processes and/or an HARQ process offset. In an embodiment, the HARQ processes or the range of HARQ processes, or the number of HARQ processes and/or the HARQ process offset, are for all CG occasions of the UL resource configuration (e.g., CG), or for the specific CG occasion (e.g., a first CG occasion in each CG period) in each period of the UL resource configuration (e.g., CG)
d) Based on the configuration information or the first indication information, the determined intervals/offsets between HARQ processes of multiple CG occasions or between HARQ processes of CG occasions within a period, may be the same or different; or
e) The configuration information or first indication information indicates a first parameter. In an embodiment, the first parameter may also be predefined. In an embodiment, the first indication information may be carried in RRC/MAC CE/DCI.

1) In an embodiment, the first parameter is configured to indicate HARQ processes or a usage range of HARQ processes of CG occasions other than a specific CG occasion in each period of the UL resource configuration (e.g., CG). In an embodiment, the HARQ processes or the usage range of HARQ processes may be a number of HARQ processes and/or an HARQ process offset. For example, the specific CG occasion is a first CG occasion in the current CG period or each CG period.
2) In an embodiment, the first parameter is configured to determine intervals/offsets of HARQ processes of the multiple CG PUSCHs, or to determine HARQ process identifiers of the multiple CG PUSCHs, or to indicate intervals/offsets of HARQ process identifiers of CG PUSCHs relative to an HARQ process identifier of a specific PUSCH (e.g., the first CG PUSCH), or to indicate an interval/offset of an HARQ process identifier of a CG PUSCH relative to the HARQ process identifier of a specific PUSCH (e.g., a CG PUSCH immediately before said CG PUSCH, or an X-th CG PUSCH before said CG PUSCH).
3) In an embodiment, the first parameter may be a value.

For example, the first parameter takes a value of A. It is assumed that a CG period has 3 CG occasions. An HARQ process of a first CG occasion is K (e.g., calculated using the HARQ process calculation formula, or directly indicated by the network), and HARQ process identifiers of two CG occasions following the first CG occasion are K + A, and K + 2A, respectively.

For example, the first parameter provides an HARQ process identifier of a first PUSCH (called PUSCH M) other than the specific CG PUSCH (e.g., the first CG PUSCH, called PUSCH A), or an HARQ process interval/offset of PUSCH M relative to the specific CG PUSCH. The HARQ process offsets between other CG PUSCHs, and between other CG PUSCHs and PUSCH M, are the same value (which may be indicated by the network (e.g., RRC/MAC CE/DCI), or predefined). In an embodiment, the HARQ process identifier of the specific PUSCH (e.g., the first CG PUSCH, or PUSCH A) is calculated based on the HARQ process calculation formula, or indicated by the network (RRC/MAC CE/DCI). As an implementation, it is assumed that the first parameter takes the value of M, and the HARQ offset between PUSCHs is B. It is assumed that a CG period has 4 CG occasions. An HARQ process of the first CG occasion within a certain period is K. HARQ process identifiers of all CG occasions in this period are K, K+M, K+M+B, and K+M+2B, respectively. Alternatively, the HARQ process identifiers of all CG occasions in this period are K, M, M+B, M+2B, respectively.

4) In an embodiment, the first parameter is a value list.

In an embodiment, the value list is a one-to-one mapping between CG PUSCH occasions and HARQ process intervals/offsets.

For example, the first parameter takes values of A, B, and C. It is assumed that a CG period has 4 CG occasions. An HARQ process of the first CG occasion is K (e.g., calculated by using the HARQ process calculation formula, or directly indicated by the network), and HARQ process identifiers of the two CG occasions following the first occasion are K+A, K+B, and K+C, respectively.

For example, the first parameter takes values of A, B, and C. It is assumed that a CG period has 4 CG occasions. An HARQ process of the first CG occasion is K (e.g., calculated by using the HARQ process calculation formula, or directly indicated by the network), and HARQ process identifiers of the two CG occasions following the first occasion are K+A, K+A+B, and K+A+B+C, respectively.

For example, the first parameter takes values of A, B, and C. It is assumed that a CG period has 4 CG occasions. An HARQ process of the first CG occasion is K (e.g., calculated by using the HARQ process calculation formula, or directly indicated by the network), and HARQ process identifiers of the two CG occasions following the first occasion are A, B, and C, respectively.

For example, the first parameter takes values of A, B, C, and D. It is assumed that a CG period has 4 CG occasions. HARQ process identifiers of all CG occasions are A, B, C, and D, respectively.

5) In an embodiment, the first parameter is a value list.

In an embodiment, the value list identifies multiple values. Different values correspond to different intervals/offsets between HARQ processes of CG occasions.

In an embodiment, different values correspond to different indices.

Further, the network indicates to the user which one of values in the value list is to be activated or used, or at least one of the values in the value list through DCI/MAC CE is to be deactivated or is not to be used.

For example, the first parameter takes values of A, B, and C. The network indicates that an HARQ offset used by the UE is B, and it is assumed that a CG period has 4 CG occasions. An HARQ process of the first CG occasion is K (e.g., calculated by using the HARQ process calculation formula, or directly indicated by the network), and HARQ process identifiers of the two CG occasions following the first occasion are K+B and K+2B, respectively.

6) In an embodiment, the first parameter is multiple value lists.

In an embodiment, in the multiple value lists, different value lists are configured to identify different intervals/offsets between HARQ processes of CG occasions.

In an embodiment, different value lists correspond to different value list indices.

Further, the network indicates to the user which value list(s) is/are to be activated or used, or which value list(s) through DCI/MAC CE is/are to be deactivated or is/are not to be used. In an embodiment, the above information is indicated by using the value list index/indices.

In an embodiment, each value list is a one-to-one mapping between CG PUSCH occasions and HARQ process intervals/offsets.

For example, the first parameter takes the values of index 1: {A, B, C}, and index 2: {D, E, F}. It is assumed that a CG period has 4 CG occasions. The DCI indicates the UE to use the value list of index2. An HARQ process of the first CG occasion is K (e.g., calculated by using the HARQ process calculation formula, or directly indicated by the network), and HARQ process identifiers of the two CG occasions following the first CG occasion are K+D, K+E, and K+F, respectively.

For example, the first parameter takes the values of index 1: {A, B, C}, and index 2: {D, E, F}. It is assumed that a CG period has 4 CG occasions. The DCI indicates the UE to use the value list of index2. An HARQ process of the first CG occasion is K (e.g., calculated by using the HARQ process calculation formula, or directly indicated by the network), and HARQ process identifiers of the two CG occasions following the first CG occasion are K+D, K+D+E, and K+D+E+F, respectively.

At operation 2, the UE determines, based on the configuration and/or indication information in operation 1, HARQ process identifiers, or an HARQ process identifier of at least one CG occasion of one/each CG period, or HARQ process identifiers of multiple UL transmission occasions within a duration. In an embodiment, this includes at least one of the following:
a) in a case where a CG period has more than one CG resource, the UE uses the first parameter, or uses the HARQ process calculation formula (defined in existing 38321) and the first parameter, or uses the first HARQ process calculation formula, or uses the first HARQ process calculation formula and the first parameter, to determine the HARQ process identifiers of the CG occasions;
b) the determination of the HARQ process identifier(s) is performed in the MAC;
c) an HARQ process identifier of the first CG occasion of each period is determined by using the existing HARQ process calculation formula (defined in existing 38321). It may also be calculated according to the scheme in Embodiment Two. It may also be determined based on the existing HARQ process calculation formula (defined in existing 38321) and the first parameter. It may also be determined based on the first parameter;
d) the determination of HARQ process identifiers of all CG resources may be made using at least one of the existing HARQ process calculation formula (defined in existing 38321), the first HARQ process calculation formula, or the first parameter;
e) the at least one HARQ process identifier of at least one CG occasion of the one/each CG period, or the HARQ process identifiers of multiple UL transmission occasions within a duration determined by the UE, may have the same of different intervals/offsets therebetween; or
f) in the case of determining the at least one HARQ process of the at least one CG occasion based on the first parameter, a modulo operation needs to be performed on the obtained HARQ process identifier, or no modulo operation is performed.

For example:
- An HARQ process identifier of the first CG occasion in a certain period is calculated by using this HARQ process calculation formula.
- HARQ Process ID = [floor(CURRENT_symbol/periodicity)] modulo nrofHARQ-Processes.
- This period has 2 CG occasions, and the first parameter is A.

An HARQ process of the second CG occasion in this period is HARQ Process ID = [floor(CURRENT_symbol/periodicity)] modulo nrofHARQ-Processes+A (after which, a modulo operation may further be performed or not performed on the process identifier. In an embodiment, the modulo operation may be performed with respect to nrofHARQ-Processes), or HARQ Process ID = [floor(CURRENT_symbol/periodicity)+A] modulo nrofHARQ-Processes, or HARQ Process ID ={ [floor(CURRENT_symbol/periodicity)] modulo nrofHARQ-Processes+A }modulo nrofHARQ-Processes.

Please refer to FIG. 5, which shows a schematic diagram of HARQ process identifiers according to an exemplary embodiment of the disclosure. As shown in FIG. 5, a period T includes at least 3 CG/DG occasions, and HARQ process identifiers of the three CG/DG occasions are incremented sequentially.

According to the solution shown in the embodiments of the disclosure, a method for determining the HARQ process identifier of each PUSCH resource is provided in the case where multiple CG PUSCH transmission resources are included in a CG period, or in the case where multiple PUSCH transmission resources exist within a duration. This is designed to avoid the problem of MAC PDU flush occurring in the case where data in a certain HARQ process has not been successfully transmitted or still needs to be saved and this HARQ process is used. Embodiment One mentioned above may be used independently, or may be used in combination with Embodiment Two below.

### Embodiment Two

Based on the solution above shown in FIG. 3 or FIG. 4, in Embodiment two, the terminal device may determine an HARQ process or HARQ process identifier of a specific first CG PUSCH (which may be the aforementioned specific PUSCH) in the case of multiple CG PUSCH resources.

For example, the UE may use a first HARQ process calculation formula to determine the HARQ process or HARQ process identifier of the first CG PUSCH, or determine the HARQ process or HARQ process identifier of the first CG PUSCH based on a second factor. The second factor may be indicated or configured by the network (through RRC/MAC CE/DCI), or may be determined by the UE.

The specific implementation may be as follows.

At operation 1, a base station transmits configuration information to a UE. The configuration information is configured for CG transmission or HARQ process determination. In an embodiment, this includes at least one of the following:
a) the configuration information is configured through RRC reconfiguration;
b) the configuration information includes available UL resources which include multiple UL resources within a duration. In an embodiment, the configuration information includes CG configuration. In an embodiment, a CG period of the CG configuration includes one or more CG PUSCH occasions;
c) the configuration information includes available HARQ processes or a range of available HARQ processes. In an embodiment, the available HARQ processes or the range of available HARQ processes includes a number of HARQ processes and/or an HARQ process offset. In an embodiment, the HARQ processes or the range of HARQ processes, or the number of HARQ processes and/or the HARQ process offset, are for all CG occasions of the UL resource configuration (e.g., CG), or for the specific CG occasion (e.g., a first CG occasion in each CG period) in each period of the UL resource configuration (e.g., CG); or
d) the configuration information or second indication information indicates a second factor, or indicates the UE to use the first HARQ process calculation formula. In an embodiment, the second indication information, or the second factor, or indication information indicating the UE to use the first HARQ process calculation formula, may be carried in RRC/MAC CE/DCI. In an embodiment, the second indication information may be related to the second factor. In an embodiment, the second factor may be predefined, or indicated by the network, or pre-configured by the network, or enabled/disabled by the network. In an embodiment, the second indication information, or the indication information indicating the UE to use the first HARQ process calculation formula, may be predefined, or indicated by the network, or pre-configured by the network, or enabled/disabled by the network.

In an embodiment, the first HARQ process calculation formula or parameters used in the first HARQ process calculation formula may be predefined, or defined within the formula itself.

In an embodiment, the second indication information or the second factor is related to at least one of the following: a service characteristic, a data volume size, a data volume variation, a number of CG configurations (or CG indices), a number of resources, a resource configuration period, a number of resources in a period, a resource spacing, a number of periods (or which period it currently is), a (maximum) number of CG resources in a period, a number of available HARQ processes, an HARQ process offset, a maximum number of HARQ processes, or an HARQ interval (offset) between HARQ processes for resources in a period.

In an embodiment, the second indication information or the second factor is a value of an adjustment factor used in the first HARQ process calculation formula, or the second factor is an HARQ process calculation offset used in the existing HARQ calculation formula for calculating the CG position.

In an embodiment, the second indication information or the second factor is parameter(s) used in the second HARQ process calculation formula.

In an embodiment, the second factor may also be determined by the UE. For example, the UE determines the second factor based on at least one of: the (maximum) number of CG resources in the CG period, the resource spacing (i.e., a maximum number of CG resources between two first CGs of adjacent periods), the maximum number of processes, the corresponding service characteristic, the corresponding data volume, the data volume variation, the number of CG configurations (or CG indices), the number of activated or used CGs, the number of resources, the resource configuration period, the number of resources in a period, the number of resources in a duration, the number of periods (or which period it currently is), the number of available HARQ processes, the HARQ process offset, or the HARQ interval (offset) between HARQ processes for resources in a period. For example, the UE determines the second factor based on the number of CG resources in the CG period or the maximum number of CG resources in the CG period. For example, the UE determines the second factor based on the resource spacing. For yet another example, the UE determines the second factor based on the maximum number of processes and the number of resources (e.g., the maximum number of processes divided by the number of resources = the second factor).

At operation 2, the UE determines, based on the configuration and/or indication information in operation 1, HARQ process identifiers, or at least one HARQ process identifier of at least one CG occasion of one/each CG period, or HARQ process identifiers of multiple UL transmission occasions within a duration. In an embodiment, this includes at least one of the following:
a) In a case where there is more than one CG resource in a CG period, or in a case of there are multiple UL PUSCHs in a duration, the UE determines at least one HARQ process identifier of at least one PUSCH.
b) The determination of the HARQ process identifier(s) is performed in the MAC.
c) In an embodiment, the first HARQ process calculation formula is at least one of the following: HARQ Process ID = [floor (CURRENT_slot × 10/(numberOfSlotsPerFrame × periodicity))*N] modulo nrofHARQ-Processes; HARQ Process ID ={ {[floor(CURRENT_symbol/periodicity)] } * N }modulo nrofHARQ-Processes; HARQ Process ID ={ {[floor(CURRENT_symbol/periodicity)] modulo nrofHARQ-Processes } * N }modulo nrofHARQ-Processes; HARQ Process ID ={ {[floor(CURRENT_symbol/periodicity)] modulo nrofHARQ-Processes + harq-ProcID-Offset2} * N }modulo nrofHARQ-Processes; or HARQ Process ID = { { [floor(CURRENT_symbol/periodicity)] + harq-ProcID- Offset2} * N }modulo nrofHARQ-Processes.
d) The UE determines an HARQ process or HARQ process identifier of the first CG PUSCH by using the first HARQ process calculation formula.
   For example: HARQ Process ID = [floor (CURRENT_slot × 10 / (numberOfSlotsPerFrame × periodicity))*N] modulo nrofHARQ-Processes. In an embodiment, N is the second factor.
   For example: HARQ Process ID ={ {[floor(CURRENT_symbol / periodicity)] }*N }modulo nrofHARQ-Processes. In an embodiment, N is the second factor.
   For example: HARQ Process ID ={ {[floor(CURRENT_symbol / periodicity)] modulo nrofHARQ-Processes }*N }modulo nrofHARQ-Processes. In an embodiment, N is the second factor.
   For example: HARQ Process ID ={ {[floor(CURRENT_symbol / periodicity)] modulo nrofHARQ-Processes + harq-ProcID-Offset2}*N }modulo nrofHARQ-Processes. In an embodiment, N is the second factor.
   For example: HARQ Process ID ={ { [floor(CURRENT_symbol / periodicity)] + harq-ProcID-Offset2}*N }modulo nrofHARQ-Processes. In an embodiment, N is the second factor.
e) The UE determines the HARQ process or HARQ process identifier of the first CG PUSCH.

In an embodiment, the UE determines the HARQ process or HARQ process identifier of the first CG PUSCH based on the second factor.

In an embodiment, the UE determines the HARQ process or HARQ process identifier of the first CG PUSCH by using the first HARQ process calculation formula, or the existing HARQ process calculation formula.

In an embodiment, the UE determines the HARQ process or HARQ process identifier of the first CG PUSCH by using the first HARQ process calculation formula, which may refer to c) or d).

In an embodiment, the UE determines the HARQ process or HARQ process identifier of the first CG PUSCH by using the existing HARQ process calculation formula, as follows:

It is assumed that: HARQ Process ID = [floor (CURRENT_slot × 10 / (numberOfSlotsPerFrame × periodicity))] modulo nrofHARQ-Processes; or HARQ Process ID = [floor (CURRENT_slot × 10 / (numberOfSlotsPerFrame × periodicity))] modulo nrofHARQ-Processes + harq-ProcID-Offset; or HARQ Process ID = [floor(CURRENT_symbol/periodicity)] modulo nrofHARQ-Processes; or HARQ Process ID = [floor(CURRENT_symbol / periodicity)] modulo nrofHARQ-Processes + harq-ProcID-Offset2. Alternatively, it is assumed that HARQ Process ID ={ { [floor(CURRENT_symbol / periodicity)] + harq-ProcID-Offset2}*N }modulo nrofHARQ-Processes. According to one or at least one of the above formulas, an HARQ process identifier of a certain CG period is calculated as M. Then, an HARQ process identifier of the first CG occasion of this period is M*N, herein N is the second indication information or the second factor (in an embodiment, N is the (maximum) number of occasions allocated for a CG period. For example, the above (maximum) number is N=4, and determined HARQ process identifiers of the first occasions of CG periods are 0, 4, 8, 12...). In an embodiment, a modulus operation needs to be performed on M*N, for example, {M*N} modulo nrofHARQ-Processes, to obtain the HARQ process identifier of the first occasion of each of the CG periods.

It is assumed that: HARQ Process ID = [floor (CURRENT_slot × 10 / (numberOfSlotsPerFrame × periodicity))] modulo nrofHARQ-Processes; or HARQ Process ID = [floor (CURRENT_slot × 10 / (numberOfSlotsPerFrame × periodicity))] modulo nrofHARQ-Processes + harq-ProcID-Offset; or HARQ Process ID = [floor(CURRENT_symbol/periodicity)] modulo nrofHARQ-Processes; or HARQ Process ID = [floor(CURRENT_symbol / periodicity)] modulo nrofHARQ-Processes + harq-ProcID-Offset2. Alternatively, it is assumed that HARQ Process ID ={ { [floor(CURRENT_symbol / periodicity)] + harq-ProcID-Offset2}*N }modulo nrofHARQ-Processes. According to one or at least one of the above formulas, an HARQ process identifier of a certain CG period is calculated as M. Then, an HARQ process identifier of the first CG occasion of this period is M+K*N, herein N is the second indication information or the second factor (In an embodiment, N is the (maximum) number of occasions allocated for a CG period - 1, or N is the resource spacing). K is an index of this period, or K = L (the current period is the L-th CG period) - 1. For example, N = 3, and determined HARQ process identifiers of the first occasions of CG periods are 0, 4, 8, 12, and the like. In an embodiment, a modulo operation needs to be performed on M+K*N, for example, { M+K*N } modulo nrofHARQ-Processes, to obtain the HARQ process identifier of the first occasion of each of the CG periods.

f) HARQ process identifiers of other occasions within a period are equal to the HARQ process identifier of the first CG PUSCH in this period + (K - 1) * 1. Here, K is the ordinal number of the PUSCH within the period. Alternatively, the HARQ process identifiers of other occasions within the period are equal to the HARQ process identifier of the first CG PUSCH in the period + (K-1) * Q (here, K is the ordinal number of the PUSCH within the period, and Q may be a fixed value, or a predefined value, or a network indication value). Alternatively, the HARQ process identifiers of other occasions within the period are equal to the HARQ process identifier of the first CG PUSCH of the period + 1. Alternatively, the HARQ process identifiers of other occasions within the period are equal to the HARQ process identifier of the first CG PUSCH of the period + Q (Q may be a fixed value, or a predefined value, or a network indication value). Alternatively, for other occasions within the period, an HARQ process identifier of each PUSCH is equal to an HARQ process identifier of a preceding PUSCH of the PUSCH + 1. Alternatively, for other occasions within the period, the HARQ process identifier of each PUSCH is equal to an HARQ process identifier of a preceding PUSCH of the PUSCH + Q (here, Q may be a fixed value, or a predefined value, or a network indication value). Alternatively, the HARQ process identifiers of other occasions within the period are calculated according to the scheme in Embodiment 1.

In an embodiment, in the disclosure, Embodiment Two and Embodiment One may be used separately or independently. In an embodiment, in the disclosure, Embodiment Two and Embodiment One may be used in combination. Please refer to FIG. 6, which shows a schematic diagram of HARQ process identifiers according to an exemplary embodiment of the disclosure. As shown in FIG. 6, at least 3 CG/DG occasions are included in a period T, and an HARQ process identifier Y of the first CG/DG occasion is determined according to the scheme in Embodiment Two. In an embodiment, HARQ process identifiers of other CG/DG occasions may be determined according to the scheme in Embodiment One.

According to the solution shown in the embodiments of the disclosure, a method for determining the HARQ process of the first CG PUSCH is provided in the case there are multiple CG PUSCH transmission resources in a CG period, or in the case of there are multiple PUSCH transmission resources within a duration. Based on the determination result of the HARQ process of the first CG PUSCH, HARQ process identifiers of other CG PUSCHs may be further determined.

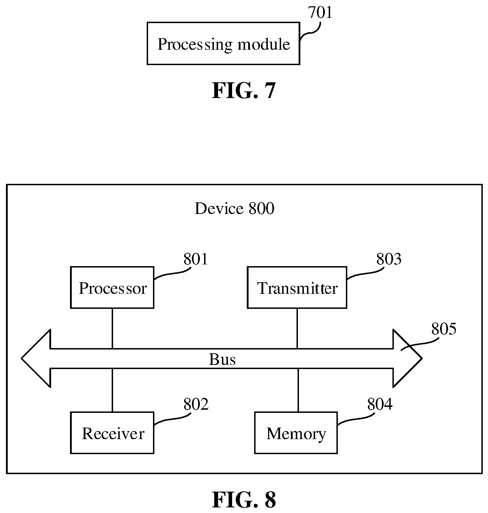

Please refer to FIG. 7, which shows a block diagram of an apparatus for processing HARQ processes according to an embodiment of the disclosure. The apparatus may be configured to execute the various operations performed by the terminal device in the embodiments shown in FIG. 3 or FIG. 4. As shown in FIG. 7, the apparatus may include a processing module 701.

The processing module 701 is configured to determine at least one HARQ process of at least one physical uplink shared channel (PUSCH) among multiple PUSCHs.

In some embodiments, among HARQ process identifiers of the multiple PUSCHs, at least one HARQ process identifier is different from other HARQ process identifiers; or among the HARQ process identifiers of the multiple PUSCHs, the at least one HARQ process identifier is the same as the other HARQ process identifiers.

In some embodiments, the processing module 701 is configured to determine the at least one HARQ process of the at least one PUSCH among the multiple PUSCHs in a case where the multiple PUSCHs include at least two configured grant (CG) resources and/or dynamic uplink grant (DG) resources within a same period, or in a case where the multiple PUSCHs include at least two CG resources and/or DG resources within a specified duration.

In some embodiments, the processing module 701 is configured to: determine the at least one HARQ process of the at least one PUSCH among the multiple PUSCHs by using a first parameter; or
determine the at least one HARQ process of the at least one PUSCH among the multiple PUSCHs by using a second HARQ process calculation formula and the first parameter; or
determine the at least one HARQ process of the at least one PUSCH among the multiple PUSCHs by using a first HARQ process calculation formula; or
determine the at least one HARQ process of the at least one PUSCH among the multiple PUSCHs by using the first HARQ process calculation formula and the first parameter; or
determine the at least one HARQ process of the at least one PUSCH among the multiple PUSCHs by using a second factor; or
determine an HARQ process of a specific PUSCH among the multiple PUSCHs by using the second HARQ process calculation formula and the second factor.

In some embodiments, HARQ process identifiers of all of the multiple PUSCHs are determined by at least one of a second HARQ process calculation formula, a first HARQ process calculation formula, a second factor, or a first parameter.

In some embodiments, the processing module 701 is configured to determine an HARQ process of a specific PUSCH among the multiple PUSCHs according to a second HARQ process calculation formula; or
determine the HARQ process of the specific PUSCH among the multiple PUSCHs according to the second HARQ process calculation formula and a first parameter; or
determine the HARQ process of the specific PUSCH among the multiple PUSCHs according to the first parameter; or
determine the HARQ process of the specific PUSCH among the multiple PUSCHs according to a first HARQ process calculation formula; or
determine the HARQ process of the specific PUSCH among the multiple PUSCHs according to a second factor; or
determine the HARQ process of the specific PUSCH among the multiple PUSCHs according to the second HARQ process calculation formula and the second factor.

In some embodiments, the processing module 701 is configured to: determine, based on network indication, pre-configuration, pre-definition, or a specified condition, whether to use at least one of the second HARQ process calculation formula, the first HARQ process calculation formula, the second factor, or the first parameter, to determine at least one HARQ process; or
determine, based on the network indication, the pre-configuration, the pre-definition, or the specified condition, to use the at least one of the second HARQ process calculation formula, the first HARQ process calculation formula, the second factor, and the first parameter, to determine the at least one HARQ process.

In some embodiments, the first parameter is configured to:
determine intervals or offsets of HARQ process identifiers of the multiple PUSCHs; or
determine the HARQ process identifiers of the multiple PUSCHs; or
indicate intervals or offsets of HARQ process identifiers of PUSCHs other than the specific PUSCH among the multiple PUSCHs relative to an HARQ process identifier of the specific PUSCH; or
indicate an interval or offset of an HARQ process identifier of a first PUSCH relative to the HARQ process identifier of the specific PUSCH among the multiple PUSCHs, herein the first PUSCH is a PUSCH subsequent to the specific PUSCH among the multiple PUSCHs; or
indicate an interval or offset of HARQ process identifier of each PUSCH other than the specific PUSCH among the multiple PUSCHs relative to an HARQ process identifier of an X-th PUSCH before the respective PUSCH; or
indicate an interval or offset of HARQ process identifier of each PUSCH among the multiple PUSCHs relative to an HARQ process identifier of an X-th PUSCH before the respective PUSCH.

In some embodiments, the first parameter is indicated by configuration information, herein the configuration information is used for configured grant (CG) transmission or HARQ process determination; or
the first parameter is indicated by first indication information; or
the first parameter is a predefined parameter.

In some embodiments, the configuration information includes available uplink resources within a duration, and the available uplink resources include one or more uplink resources.

In some embodiments, the configuration information includes CG configuration and/or dynamic uplink grant (DG) configuration.

In some embodiments, a CG period of the CG configuration includes one or more CG PUSCH occasions.

In some embodiments, the configuration information includes available HARQ processes or a range of available HARQ processes.

In some embodiments, the available HARQ processes or the range of available HARQ processes includes:
A number of HARQ processes and/or an HARQ process offset.

In some embodiments, the number of HARQ processes and/or the HARQ process offset is for all CG occasions of uplink resource configuration; or the number of HARQ processes and/or the HARQ process offset is for a specific CG occasion in each period of the uplink resource configuration.

In some embodiments, the configuration information is configured through a radio resource control (RRC) reconfiguration message.

In some embodiments, the first parameter is further configured to:
indicate HARQ processes or a usage range of HARQ processes for CG occasions other than the specific CG occasion in each period of the uplink resource configuration.

In some embodiments, the first indication information is carried in a radio resource control (RRC) message, a media access control (MAC) control element (CE), or downlink control information (DCI).

In some embodiments, the first parameter is a single value.

In some embodiments, the first parameter is intervals or offsets between HARQ processes of adjacent PUSCHs among the multiple PUSCHs.

In some embodiments, the first parameter is an HARQ process identifier of a specific PUSCH among the multiple PUSCHs; or
the first parameter is a process identifier of a first PUSCH other than a specific PUSCH among the multiple PUSCHs; or
the first parameter is an HARQ interval or offset of a first PUSCH other than a specific PUSCH among the multiple PUSCHs relative to the specific PUSCH; or
the first parameter is an HARQ interval or offset of each of the multiple PUSCHs relative to a specific PUSCH; or
the first parameter is an HARQ interval or offset of each of the multiple PUSCHs relative to an X-th PUSCH before the respective PUSCH.

In some embodiments, among the multiple PUSCHs other than the specific PUSCH, intervals or offsets between adjacent PUSCHs are a same first value; or
among the multiple PUSCHs, intervals or offsets between adjacent PUSCHs are a same second value.

In some embodiments, the first value is indicated by a network, or the first value is a predefined value; or the second value is indicated by the network, or the second value is a predefined value.

In some embodiments, the first parameter is a first value list.

In some embodiments, the first value list is a value list of HARQ process intervals or offsets of multiple PUSCH occasions; or
the first value list is a one-to-one mapping between the PUSCH occasions and the HARQ process intervals or offsets; or
the first value list is a value list of HARQ process identifiers of the multiple PUSCH occasions; or
the first value list is a one-to-one mapping between the PUSCH occasions and the HARQ process identifiers.

In some embodiments, the first value list includes intervals or offsets between process identifiers of adjacent PUSCHs among the multiple PUSCHs; or
the first value list includes an interval or offset of a process identifier of each of the multiple PUSCHs other than the specific PUSCH, relative to the process identifier of the specific PUSCH; or
the first value list includes an interval or offset of the process identifier of each of the multiple PUSCHs other than the specific PUSCH, relative to a process identifier of an X-th HARQ process before the respective PUSCH; or
the first value list includes process identifiers of the multiple PUSCHs other than the specific PUSCH; or the first value list includes process identifiers of the multiple PUSCHs; or
The first value list includes an interval or offset of a process identifier of each of the multiple PUSCHs relative to the process identifier of the specific PUSCH; or
The first value list includes an interval or offset of the process identifier of each of the multiple PUSCHs relative to a process identifier of an X-th HARQ process before the respective PUSCH.

In some embodiments, the first value list includes at least two values, and each of the at least two values corresponds to a set of intervals or offsets between HARQ processes for PUSCH occasions; or the first value list includes at least two values, and each of the at least two values corresponds to a set of HARQ process identifiers for PUSCH occasions.

In some embodiments, the at least two values correspond to different value indices.

In some embodiments, the processing module 701 is further configured to: determine to activate or use at least one value in the first value list based on second indication information; or
determine to deactivate or not use at least one value in the first value list based on second indication information.

In some embodiments, the second indication information is carried in downlink control information (DCI) or a media access control (MAC) control element (CE).

In some embodiments, the first parameter includes at least two second value lists.

In some embodiments, each of the at least two second value lists corresponds to a set of intervals or offsets between HARQ processes for PUSCH occasions; or each of the at least two second value lists corresponds to a set of HARQ process identifiers for PUSCH occasions.

In some embodiments, the second value list is a one-to-one mapping between PUSCH occasions and HARQ process intervals or offsets; or the second value list is a one-to-one mapping between the PUSCH occasions and HARQ identifiers; or the second value list is a value list of HARQ process identifiers of multiple PUSCH occasions; or the second value list is a one-to-one mapping between the PUSCH occasions and HARQ process identifiers.

In some embodiments, the at least two second value lists correspond to different value list indices.

In some embodiments, the processing module 701 is further configured to: determine to activate or use at least one of the at least two second value lists based on third indication information; or
determine to deactivate or not use the at least one of the at least two second value lists based on the third indication information.

In some embodiments, the third indication information is carried in downlink control information (DCI) or a media access control (MAC) control element (CE).

In some embodiments, the second factor is related to at least one of the following:
a service characteristic, a data volume size, a data volume variation, a number of CG and/or DG configurations, a number of activated or used CGs and/or DGs, a number of resources, a resource configuration period, a number of resources in a period, a number of resources in a duration, a resource spacing, a number of periods, a current period sequence, a number of CG resources in a period, a number of available HARQ processes, an HARQ process offset, a maximum number of HARQ processes, or an HARQ interval or offset between HARQ processes for resources in a period.

In some embodiments, the second factor is a value of an adjustment factor used in the first HARQ process calculation formula; or
The second factor is an HARQ process calculation offset used in an HARQ calculation formula for calculating a position of CG and/or DG.

In some embodiments, the second factor is predefined, or indicated by a network, or configured by the network, or determined by the terminal device.

In some embodiments, the second factor is determined by the terminal device based on at least one of the following:
A service characteristic, a data volume size, a data volume variation, a number of CG and/or DG configurations, a number of activated or used CGs and/or DGs, a number of resources, a resource configuration period, a number of resources in a period, a number of resources in a duration, a resource spacing, a number of periods, a current period sequence, a number of CG resources in a period, a number of available HARQ processes, an HARQ process offset, a maximum number of HARQ processes, or an HARQ interval or offset between HARQ processes for resources in a period.

In some embodiments, HARQ process identifiers of PUSCHs other than the specific PUSCH among the multiple PUSCHs are equal to the HARQ process identifier of the specific PUSCH plus a first value; or
An HARQ process identifier of each of the PUSCHs other than the specific PUSCH among the multiple PUSCHs is equal to an HARQ process identifier of an X-th PUSCH before the respective PUSCH plus a third value; or
Each of the HARQ process identifiers of the PUSCHs other than the specific PUSCH among the multiple PUSCHs is incremented or decremented by a second value (i.e., increased or reduced by a second value relative to the HARQ process identifier of its previous or subsequent PUSCH) based on an interval relative to the specific PUSCH.

In some embodiments, the first HARQ process calculation formula is: HARQ Process ID = [floor (CURRENT_slot × 10/(numberOfSlotsPerFrame × periodicity))*N] modulo nrofHARQ-Processes; or HARQ Process ID = [floor(CURRENT_symbol/periodicity) *N] modulo nrofHARQ-Processes; or HARQ Process ID ={ {[floor(CURRENT_symbol/periodicity)] modulo nrofHARQ-Processes + harq-ProcID-Offset2}*N }modulo nrofHARQ-Processes; or HARQ Process ID ={ { [floor(CURRENT_symbol/periodicity)] + harq-ProcID- Offset2}*N }modulo nrofHARQ-Processes.

Here, N is the second factor.

In some embodiments, the second HARQ process calculation formula is: HARQ Process ID = [floor (CURRENT_slot × 10/(numberOfSlotsPerFrame × periodicity))] modulo nrofHARQ-Processes; or HARQ Process ID = [floor (CURRENT_slot × 10/(numberOfSlotsPerFrame × periodicity))] modulo nrofHARQ-Processes + harq-ProcID-Offset; or HARQ Process ID = [floor(CURRENT_symbol/periodicity)] modulo nrofHARQ- Processes; or HARQ Process ID = [floor(CURRENT_symbol/periodicity)] modulo nrofHARQ- Processes + harq-ProcID-Offset2.

In some embodiments, the processing module 701 is further configured to: perform a modulo operation on HARQ process identifiers of PUSCHs other than a specific PUSCH among the multiple PUSCHs; or
perform the modulo operation on an HARQ process identifier of each of the multiple PUSCHs; or
perform the modulo operation on an HARQ process identifier of the specific PUSCH among the multiple PUSCHs.

In some embodiments, the modulo operation is:
performed in an HARQ process calculation formula; or
performed outside the HARQ process calculation formula; or
performed on a result of the HARQ process calculation formula.

Please refer to FIG. 8, which shows a schematic structural diagram of a device 800 according to an embodiment of the disclosure. The device 800 may include: a processor 801, a receiver 802, a transmitter 803, a memory 804, and a bus 805.

The processor 801 includes one or more processing cores. The processor 801 executes software programs and modules to perform various functional applications and information processing.

The receiver 802 and the transmitter 803 may be implemented as a single communication component, which may be a communication chip. The communication chip may also be referred to as a transceiver.

The memory 804 is connected to the processor 801 through the bus 805.

The memory 804 may be configured to store a computer program. The processor 801 is configured to execute the computer program to implement the various operations performed by the terminal in the above method embodiments.

Further, the memory 804 may be implemented by any type of volatile or non-volatile storage device or a combination thereof. The volatile or non-volatile storage device includes, but is not limited to: a disk or an optical disk, an electrically erasable programmable read-only memory, an erasable programmable read-only memory, a static random access memory, a read-only memory, a magnetic memory, a flash memory, and a programmable read-only memory.

The above-mentioned device may be implemented as the terminal device or the network side device in the above various method embodiments.

In an exemplary embodiment, the device includes a processor, a memory, and a transceiver (which may include a receiver and a transmitter, the receiver is configured to receive information, and the transmitter is configured to transmit information).

When the above device is implemented as the terminal device in the above various method embodiments,

The processor is configured to determine at least one HARQ process of at least one PUSCH among multiple PUSCHs.

The operations executed by the transceiver and the processor may refer to all or part of the operations executed by the terminal device in the embodiments shown in FIG. 3 or FIG. 4, and will not be repeated herein.

A computer-readable storage medium is further provided according to an embodiment of the disclosure, having stored thereon a computer program. The computer program is loaded and executed by a processor, to implement the various operations executed by the terminal device or the network side device in the method shown in FIG. 3 or FIG. 4.

The disclosure further provides a computer program product or computer program, including computer instructions stored in a computer-readable storage medium. A processor of a terminal device or network side device reads the computer instructions from the computer-readable storage medium, and the processor executes the computer instructions, causing the terminal device or network side device to execute the various operations executed by the terminal device or network side device in the method shown in FIG. 3 or FIG. 4.

The disclosure further provides a computer program, including computer instructions stored in a computer-readable storage medium. A processor of a terminal device or network side device reads the computer instructions from the computer-readable storage medium, and the processor executes the computer instructions, causing the terminal device or network side device to execute the various operations executed by the terminal device or network side device in the method shown in FIG. 3 or FIG. 4.

The disclosure further provides a chip, used in a terminal. The chip may execute the various operations executed by the terminal device or network side device in the method shown in FIG. 3 or FIG. 4.

It should be realized by those skilled in the art that in the above one or more examples, the functions described in the embodiments of the disclosure may be implemented using hardware, software, firmware, or any combination thereof. When implemented using the software, these functions may be stored in a computer-readable medium or transmitted as one or more instructions or codes on the computer-readable medium. The computer-readable medium includes a computer storage medium and a communication medium. The communication medium includes any medium that facilitates the transmission of computer programs from one place to another. The storage medium may be any available medium that a general or specialized computer can access.

The above described are merely exemplary embodiments of the disclosure, and are not intended to limit the disclosure. Any modifications, equivalent substitutions, improvements, etc. made within the spirit and principles of the disclosure shall be included within the scope of protection of the disclosure.

## Claims

1. A method for processing hybrid automatic repeat request (HARQ) processes, performed by a terminal, and comprising:
determining at least one HARQ process of at least one physical uplink shared channel (PUSCH) among a plurality of PUSCHs.

2. The method of claim 1, wherein:
among HARQ process identifiers of the plurality of PUSCHs, at least one HARQ process identifier is different from other HARQ process identifiers; or
among HARQ process identifiers of the plurality of PUSCHs, at least one HARQ process identifier is the same as other HARQ process identifiers.

3. The method of claim 1 or 2, wherein determining the at least one HARQ process of the at least one PUSCH among the plurality of PUSCHs comprises:
determining the at least one HARQ process of the at least one PUSCH among the plurality of PUSCHs in a case where the plurality of PUSCHs comprise at least two configured grant (CG) resources and/or dynamic uplink grant (DG) resources within a same period, or in a case where the plurality of PUSCHs comprise at least two CG resources and/or DG resources within a specified duration.

4. The method of any one of claims 1 to 3, wherein determining the at least one HARQ process of the at least one PUSCH among the plurality of PUSCHs comprises:
determining the at least one HARQ process of the at least one PUSCH among the plurality of PUSCHs by using a first parameter; or
determining the at least one HARQ process of the at least one PUSCH among the plurality of PUSCHs by using a second HARQ process calculation formula and the first parameter; or
determining the at least one HARQ process of the at least one PUSCH among the plurality of PUSCHs by using a first HARQ process calculation formula; or
determining the at least one HARQ process of the at least one PUSCH among the plurality of PUSCHs by using the first HARQ process calculation formula and the first parameter; or
determining the at least one HARQ process of the at least one PUSCH among the plurality of PUSCHs by using a second factor; or
determining an HARQ process of a specific PUSCH among the plurality of PUSCHs by using the second HARQ process calculation formula and the second factor.

5. The method of any one of claims 1 to 4, wherein HARQ process identifiers of all of the plurality of PUSCHs are determined by at least one of a second HARQ process calculation formula, a first HARQ process calculation formula, a second factor, or a first parameter.

6. The method of any one of claims 1 to 4, wherein determining the at least one HARQ process of the at least one PUSCH among the plurality of PUSCHs comprises:
determining an HARQ process of a specific PUSCH among the plurality of PUSCHs according to a second HARQ process calculation formula; or
determining the HARQ process of the specific PUSCH among the plurality of PUSCHs according to the second HARQ process calculation formula and a first parameter; or
determining the HARQ process of the specific PUSCH among the plurality of PUSCHs according to the first parameter; or
determining the HARQ process of the specific PUSCH among the plurality of PUSCHs according to a first HARQ process calculation formula; or
determining the HARQ process of the specific PUSCH among the plurality of PUSCHs according to a second factor; or
determining the HARQ process of the specific PUSCH among the plurality of PUSCHs according to the second HARQ process calculation formula and the second factor.

7. The method of any one of claims 4 to 6, further comprising:
determining, based on network indication, pre-configuration, pre-definition, or a specified condition, whether to use at least one of the second HARQ process calculation formula, the first HARQ process calculation formula, the second factor, or the first parameter to determine at least one HARQ process; or
determining, based on the network indication, the pre-configuration, the pre-definition, or the specified condition, to use the at least one of the second HARQ process calculation formula, the first HARQ process calculation formula, the second factor, or the first parameter to determine the at least one HARQ process.

8. The method of any one of claims 4 to 6, wherein the first parameter is configured to:
determine intervals or offsets of HARQ process identifiers of the plurality of PUSCHs; or
determine the HARQ process identifiers of the plurality of PUSCHs; or
indicate intervals or offsets of HARQ process identifiers of PUSCHs other than the specific PUSCH among the plurality of PUSCHs relative to an HARQ process identifier of the specific PUSCH; or
indicate an interval or offset of an HARQ process identifier of a first PUSCH relative to the HARQ process identifier of the specific PUSCH among the plurality of PUSCHs, wherein the first PUSCH is a PUSCH subsequent to the specific PUSCH among the plurality of PUSCHs; or
indicate an interval or offset of the HARQ process identifier of each PUSCH other than the specific PUSCH among the plurality of PUSCHs relative to an HARQ process identifier of an X-th PUSCH before the respective PUSCH; or
indicate an interval or offset of an HARQ process identifier of each PUSCH among the plurality of PUSCHs relative to an HARQ process identifier of an X-th PUSCH before the respective PUSCH.

9. The method of any one of claims 4 to 8, wherein:
the first parameter is indicated by configuration information, wherein the configuration information is used for configured grant (CG) transmission or HARQ process determination; or
the first parameter is indicated by first indication information; or
the first parameter is a predefined parameter.

10. The method of claim 9, wherein the configuration information comprises:
available uplink resources within a duration, and the available uplink resources comprise one or more uplink resources.

11. The method of claim 9 or 10, wherein the configuration information comprises CG configuration and/or dynamic uplink grant (DG) configuration.

12. The method of claim 11, wherein a CG period of the CG configuration comprises one or more CG PUSCH occasions.

13. The method of any one of claims 9 to 12, wherein the configuration information comprises:
available HARQ processes or a range of available HARQ processes.

14. The method of claim 13, wherein the available HARQ processes or the range of available HARQ processes comprises:
a number of HARQ processes and/or an HARQ process offset.

15. The method of claim 14, wherein:
the number of HARQ processes and/or the HARQ process offset is for all CG occasions of uplink resource configuration; or
the number of HARQ processes and/or the HARQ process offset is for a specific CG occasion in each period of the uplink resource configuration.

16. The method of any one of claims 9 to 15, wherein the configuration information is configured through a radio resource control (RRC) reconfiguration message.

17. The method of any one of claims 9 to 16, wherein the first parameter is further configured to:
indicate HARQ processes or a usage range of HARQ processes for CG occasions other than the specific CG occasion in each period of the uplink resource configuration.

18. The method of claim 9, wherein the first indication information is carried in a radio resource control (RRC) message, a media access control (MAC) control element (CE), or downlink control information (DCI).

19. The method of any one of claims 4 to 18, wherein the first parameter is a single value.

20. The method of claim 19, wherein:
the first parameter is intervals or offsets between HARQ processes of adjacent PUSCHs among the plurality of PUSCHs.

21. The method of claim 19, wherein:
the first parameter is an HARQ process identifier of the specific PUSCH among the plurality of PUSCHs; or
the first parameter is a process identifier of a first PUSCH other than the specific PUSCH among the plurality of PUSCHs; or
the first parameter is an HARQ interval or offset of a first PUSCH other than the specific PUSCH among the plurality of PUSCHs relative to the specific PUSCH; or
the first parameter is an HARQ interval or offset of each of the plurality of PUSCHs relative to the specific PUSCH; or
the first parameter is an HARQ interval or offset of each of the plurality of PUSCHs relative to an X-th PUSCH before the respective PUSCH.

22. The method of claim 21, wherein:
among the plurality of PUSCHs other than the specific PUSCH, intervals or offsets between adjacent PUSCHs are a same first value; or
among the plurality of PUSCHs, interval or offsets between adjacent PUSCHs are a same second value.

23. The method of claim 22, wherein the first value is indicated by a network or is a predefined value; or
the second value is indicated by the network or is a predefined value.

24. The method of any one of claims 4 to 18, wherein the first parameter is a first value list.

25. The method of claim 24, wherein:
the first value list is a value list of HARQ process intervals or offsets of a plurality of PUSCH occasions; or
the first value list is a one-to-one mapping between the PUSCH occasions and the HARQ process intervals or offsets; or
the first value list is a value list of HARQ process identifiers of the plurality of PUSCH occasions; or
the first value list is a one-to-one mapping between the PUSCH occasions and the HARQ process identifiers.

26. The method of claim 25, wherein:
the first value list comprises intervals or offsets between process identifiers of adjacent PUSCHs among the plurality of PUSCHs; or
the first value list comprises an interval or offset of a process identifier of each of the plurality of PUSCHs other than the specific PUSCH, relative to the process identifier of the specific PUSCH; or
the first value list comprises an interval or offset of the process identifier of each of the plurality of PUSCHs other than the specific PUSCH, relative to a process identifier of an X-th HARQ process before the respective PUSCH; or
the first value list comprises process identifiers of the plurality of PUSCHs other than the specific PUSCH; or
the first value list comprises process identifiers of the plurality of PUSCHs; or
the first value list comprises an interval or offset of a process identifier of each of the plurality of PUSCHs relative to the process identifier of the specific PUSCH; or
the first value list comprises an interval or offset of the process identifier of each of the plurality of PUSCHs relative to a process identifier of an X-th HARQ process before the respective PUSCH.

27. The method of claim 25, wherein the first value list comprises at least two values, and each of the at least two values corresponds to a set of intervals or offsets between HARQ processes for PUSCH occasions; or the first value list comprises at least two values, and each of the at least two values corresponds to a set of HARQ process identifiers for PUSCH occasions.

28. The method of claim 27, wherein the at least two values correspond to different value indices.

29. The method of claim 28, further comprising:
determining to activate or use at least one value in the first value list based on second indication information; or
determining to deactivate or not use at least one value in the first value list based on second indication information.

30. The method of claim 29, wherein the second indication information is carried in downlink control information (DCI) or a media access control (MAC) control element (CE).

31. The method of any one of claims 4 to 18, wherein the first parameter comprises at least two of second value lists.

32. The method of claim 31, wherein:
each of the at least two second value lists corresponds to a set of intervals or offsets between HARQ processes for PUSCH occasions; or each of the at least two second value lists corresponds to a set of HARQ process identifiers for PUSCH occasions.

33. The method of claim 31, wherein the second value list is a one-to-one mapping between PUSCH occasions and HARQ process intervals or offsets; or the second value list is a one-to-one mapping between the PUSCH occasions and HARQ identifiers; or the second value list is a value list of HARQ process identifiers of a plurality of PUSCH occasions; or the second value list is a one-to-one mapping between the PUSCH occasions and HARQ process identifiers.

34. The method of any one of claims 31 to 33, wherein the at least two second value lists correspond to different value list indices.

35. The method of any one of claims 32 to 34, further comprising:
determining to activate or use at least one of the at least two second value lists based on third indication information; or
determining to deactivate or not use at least one of the at least two second value lists based on the third indication information.

36. The method of claim 35, wherein the third indication information is carried in downlink control information (DCI) or a media access control (MAC) control element (CE).

37. The method of claim 6, wherein the second factor is related to at least one of the following:
a service characteristic, a data volume size, a data volume variation, a number of CG and/or DG configurations, a number of activated or used CGs and/or DGs, a number of resources, a resource configuration period, a number of resources in a period, a number of resources in a duration, a resource spacing, a number of periods, a current period sequence, a number of CG resources in a period, a number of available HARQ processes, an HARQ process offset, a maximum number of HARQ processes, or an HARQ interval or offset between HARQ processes for resources in a period.

38. The method of claim 6, wherein:
the second factor is a value of an adjustment factor used in the first HARQ process calculation formula; or
the second factor is an HARQ process calculation offset used in an HARQ calculation formula for calculating a position of CG and/or DG.

39. The method of claim 6, wherein the second factor is predefined, or indicated by a network, or configured by the network, or determined by the terminal device.

40. The method of claim 39, wherein the second factor is determined by the terminal device based on at least one of the following:
a service characteristic, a data volume size, a data volume variation, a number of CG and/or DG configurations, a number of activated or used CGs and/or DGs, a number of resources, a resource configuration period, a number of resources in a period, a number of resources in a duration, a resource spacing, a number of periods, a current period sequence, a number of CG resources in a period, a number of available HARQ processes, an HARQ process offset, a maximum number of HARQ processes, or an HARQ interval or offset between HARQ processes for resources in a period.

41. The method of claim 6, wherein:
HARQ process identifiers of PUSCHs other than the specific PUSCH among the plurality of PUSCHs are equal to the HARQ process identifier of the specific PUSCH plus a first value; or
an HARQ process identifier of each of the PUSCHs other than the specific PUSCH among the plurality of PUSCHs is equal to an HARQ process identifier of an X-th PUSCH before the respective PUSCH plus a third value; or
an HARQ process identifier of each of the PUSCHs other than the specific PUSCH among the plurality of PUSCHs is incremented or decremented by a second value based on intervals relative to the specific PUSCH.

42. The method of any one of claims 4 to 6, wherein the first HARQ process calculation formula is: HARQ Process ID = [floor (CURRENT_slot × 10/(numberOfSlotsPerFrame × periodicity))*N] modulo nrofHARQ-Processes; or HARQ Process ID = [floor(CURRENT_symbol/periodicity) *N] modulo nrofHARQ- Processes; or HARQ Process ID ={ {[floor(CURRENT_symbol/periodicity)] modulo nrofHARQ- Processes + harq-ProcID-Offset2}*N }modulo nrofHARQ-Processes; or HARQ Process ID ={ { [floor(CURRENT_symbol/periodicity)] + harq-ProcID- Offset2}*N }modulo nrofHARQ-Processes; wherein N is the second factor.

43. The method of any one of claims 4 to 6, wherein the second HARQ process calculation formula is: HARQ Process ID = [floor (CURRENT_slot × 10/(numberOfSlotsPerFrame × periodicity))] modulo nrofHARQ-Processes; or HARQ Process ID = [floor (CURRENT_slot × 10/(numberOfSlotsPerFrame × periodicity))] modulo nrofHARQ-Processes + harq-ProcID-Offset; or HARQ Process ID = [floor(CURRENT_symbol/periodicity)] modulo nrofHARQ- Processes; or HARQ Process ID = [floor(CURRENT_symbol/periodicity)] modulo nrofHARQ- Processes + harq-ProcID-Offset2.

44. The method of any one of claims 1 to 43, further comprising:
performing a modulo operation on HARQ process identifiers of PUSCHs other than a specific PUSCH among the plurality of PUSCHs; or
performing the modulo operation on an HARQ process identifier of each of the plurality of PUSCHs; or
performing the modulo operation on an HARQ process identifier of the specific PUSCH among the plurality of PUSCHs.

45. The method of claim 44, wherein the modulo operation is:
performed in an HARQ process calculation formula; or
performed outside the HARQ process calculation formula; or
performed on a result of the HARQ process calculation formula.

46. An apparatus for processing hybrid automatic repeat request (HARQ) processes, comprising:
a processing module, configured to determine at least one HARQ process of at least one physical uplink shared channel (PUSCH) among a plurality of PUSCHs.

47. A terminal device, comprising a processor, a memory, and a transceiver;
wherein the processor is configured to determine at least one hybrid automatic repeat request (HARQ) process of at least one physical uplink shared channel (PUSCH) among a plurality of PUSCHs.

48. A computer-readable storage medium, having stored thereon a computer program, the computer program configured to be executed by a processor, to implement the method for processing the HARQ processes of any one of claims 1 to 45.

49. A computer program product, comprising computer instructions stored in a computer-readable storage medium; a processor of a terminal device or a network side device executing the computer instructions, causing the terminal device or the network side device to perform the method for processing the HARQ processes of any one of claims 1 to 45.

50. A computer program, comprising computer instructions, a processor of a terminal device or a network side device executing the computer instructions, causing the terminal device or the network side device to perform the method for processing the HARQ processes of any one of claims 1 to 45.

51. A chip, configured to perform the method for processing the HARQ processes of any one of claims 1 to 45.
